# EUROPÄISCHE PATENTANMELDUNG

(11) **EP 4 706 925 A1**
(43) Veröffentlichungstag der Anmeldung: **11.03.2026**
(21) Anmeldenummer: 25198968.7
(22) Anmeldetag: 29.08.2025
(51) Int. Cl.: B28D 1/04, B28D 7/04, B65G 15/26, B23Q 11/00, B27B 5/10

(54) **STEINBEARBEITUNGSVORRICHTUNG**

(30) Priorität: 02.09.2024 AT 507152024
(71) Anmelder: Prankl, Helmut, 1030 Wien (AT)
(72) Erfinder: Prankl, Helmut, 1030 Wien (AT)
(74) Vertreter: Patentanwaltskanzlei Matschnig & Forsthuber OG

(57) **Zusammenfassung**

Steinbearbeitungsvorrichtung (10) zum Bearbeiten von Steinen, wobei die Steinbearbeitungsvorrichtung (10) Folgendes umfasst:
- ein Schneideeinrichtung (100), umfassend ein elektromotorisch angetriebenes Schneidwerkzeug (110) zum Schneiden von Steinen,
- eine Zuführeinrichtung (200) zum Auflegen und Zuführen des zu bearbeitenden Steins zur Schneideeinrichtung (100),
- eine Abnahmeeinrichtung (300) zum Abnehmen des in der Schneideeinrichtung (100) bearbeiteten Steins,
- ein Gestell (600), welches die vorgenannten Komponenten trägt,
wobei die Zuführeinrichtung ein Förderband (210) umfasst, welches vorzugsweise in zwei entgegengesetzte Richtungen betreibbar ist, wobei das Förderband (210) eine Vielzahl von nebeneinander angeordneten elastischer Noppen (211) aufweist, welche derart mit dem Schneidwerkzeug (110) zusammenwirken, dass beim Schneidvorgang des Steins durch das Schneidwerkzeug (110) eine Kraft (F) auf den Stein in Richtung des Förderbandes (210) ausgeübt wird, wodurch der Stein die Noppen (211) des Förderbandes (210) andrückt, sodass die Oberfläche der Noppen (211) vergrößert ist, um den Stein gegen ein Verschieben beim Schneiden zu sichern.

## Beschreibung

Die Erfindung betrifft eine Steinbearbeitungsvorrichtung zum Bearbeiten von Steinen, insbesondere eine mobile Steinbearbeitungsvorrichtung, insbesondere zum Schneiden von Betonsteinen und/oder Natursteinen, wobei die Steinbearbeitungsvorrichtung Folgendes umfasst:
- eine Schneideeinrichtung, umfassend ein elektromotorisch angetriebenes Schneidwerkzeug zum Schneiden von Steinen, insbesondere ein Sägeblatt,
- eine Zuführeinrichtung zum Auflegen und Zuführen des zu bearbeitenden Steins (20) zur Schneideeinrichtung,
- eine Abnahmeeinrichtung zum Abnehmen des in der Schneideeinrichtung bearbeiteten Steins,
- ein Gestell, welches die vorgenannten Komponenten trägt.

Die Bearbeitung von Naturstein, insbesondere das Schneiden von Steinblöcken in handhabbare Stücke, ist ein zentrales Element in der Bau- und Steinverarbeitungsindustrie. Traditionell wurden stationäre Steinschneidemaschinen eingesetzt, die eine hohe Präzision und Schnittqualität bieten, jedoch aufgrund ihrer mangelnden Mobilität erhebliche logistische und wirtschaftliche Nachteile mit sich bringen. Diese Nachteile umfassen hohe Transportkosten, erhöhte Rüstzeiten und die Notwendigkeit, große Steinblöcke zunächst zur stationären Maschine zu bringen.

Dies ist besonders problematisch bei großen Bauprojekten oder bei Arbeiten in abgelegenen Gebieten, wo der Transport von schwerem Gerät und Materialien aufwendig und kostspielig sein kann.

Darüber hinaus erfordern, insbesondere stationäre, Steinschneidemaschinen oft mehrere Bediener, was den Personalaufwand erhöht und die Betriebskosten steigert. Die Notwendigkeit, mehrere Arbeitskräfte einzusetzen, kann zudem die Effizienz beeinträchtigen und die Arbeitsplanung komplizieren. In vielen Fällen ist es auch schwierig, eine ausreichende Stromversorgung an abgelegenen Orten sicherzustellen, was den Einsatz dieser Maschinen weiter erschwert.

Um diese Herausforderungen zu bewältigen, wurden verschiedene Ansätze zur Entwicklung mobiler Steinschneidemaschinen verfolgt. Bisherige (mobile) Lösungen weisen jedoch oft Einschränkungen in Bezug auf die Schnittgenauigkeit, die Bedienerfreundlichkeit oder die Robustheit auf. Viele dieser Maschinen erfordern immer noch den Einsatz von mehreren Personen oder sind nicht ausreichend kompakt und leicht, um eine echte Mobilität zu gewährleisten.

Es ist daher eine Aufgabe der Erfindung eine verbesserte Steinbearbeitungsvorrichtung bereitzustellen.

Diese Aufgabe wird dadurch gelöst, dass die Zuführeinrichtung ein Förderband umfasst, welches vorzugsweise in zwei entgegengesetzte Richtungen betreibbar ist, wobei das Förderband eine Vielzahl von nebeneinander angeordneten, elastischer Elemente, vorzugsweise noppenartiger Elemente, aufweist, welche derart mit dem Schneidwerkzeug zusammenwirken, dass beim Schneidvorgang des Steins durch das Schneidwerkzeug eine Kraft auf den Stein in Richtung des Förderbandes ausgeübt wird, wodurch der Stein die elastischen Elemente des Förderbandes derart andrückt, sodass die Oberfläche der elastischen Elemente, an welcher Oberfläche der Stein anliegt, vergrößert ist, um den Stein gegen ein Verschieben beim Schneiden zu sichern.

Dies hat den Vorteil, dass beim Auflegen des Steins auf das Förderband aufgrund der elastischen Elemente, der Stein noch durch einen Benutzer verschiebbar ist und für den Schneidvorgang optimal ausgerichtet werden kann. Beim Schneidvorgang und dem Andrücken des Steins auf die elastischen Elemente, wird der Stein durch die elastischen Elemente gegen ein Verschieben gesichert. Nach Wegfall der Andrückkraft (durch das Schneidwerkzeug) kehren die elastischen Elemente wieder in den ursprünglichen Zustand zurück, sodass der Stein durch den Benutzer wieder leichter verschiebbar ist. Dadurch kann ein Transport bzw. ein Führen des Steins durch die Steinbearbeitungsvorrichtung ohne ein zusätzliches Festspannen durch weitere Vorrichtungen gewährleistet werden. Die elastischen Elemente können dabei als elastische noppenartige Elemente ausgebildet sein. Ebenso ist möglich, dass die elastischen Elemente als längliche Stege ausgebildet sind, welche parallel zueinander und quer bzw. orthogonal zur Bewegungsrichtung des Förderbandes angeordnet sind. Die elastischen Elemente sind vorzugsweise aus einem gummiartigen Material hergestellt, welches ermöglicht, dass die Reibung zwischen dem zu bearbeitenden Stein auf dem Förderband erhöht wird.

Ein weiteres herausragendes Merkmal der erfindungsgemäßen Vorrichtung ist, dass sie von nur einer einzelnen Person betrieben werden kann. Dies wird durch eine benutzerfreundliche Steuerung und eine ergonomische Gestaltung der Maschine erreicht, die den Bedienungsaufwand minimieren und die Effizienz maximieren. Dadurch wird nicht nur der Personalaufwand reduziert, sondern auch die Sicherheit und Handhabung verbessert.

Zum Betreiben des Schneidwerkzeugs kann ein Motor mit 400 Volt betrieben werden, sodass Schnitte von bis zu 20 cm Stärke ermöglicht werden.

Es kann vorgesehen sein, dass die Einführöffnung eine Breite von bis zu 60 cm aufweist. Es kann vorgesehen sein, dass auch die Ausführöffnung die gleiche Breite wie die Einführöffnung aufweist.

Es kann vorgesehen sein, dass die Steinbearbeitungsvorrichtung eine Hebeeinrichtung, zum Heben des zu schneidenden Steins auf die Zuführeinrichtung und zum Heben des geschnittenen Steins von der Abnahmeeinrichtung umfasst.

Es kann vorgesehen sein, dass die Steinbearbeitungsvorrichtung eine Schallschutzhaube umfasst, welche die Schneideeinrichtung umgibt und eingerichtet ist, den von der Schneideeinrichtung erzeugenden Schall zu dämmen, wobei die Schallschutzhaube eine Einführöffnung und eine Ausführöffnung aufweist, wobei ein zu bearbeitender Stein durch die Zuführeinrichtung über die Einführöffnung zum Schneidewerkzeug führbar ist.

Es kann vorgesehen sein, dass das Gestell Rollen zum mobilen Positionieren der Steinbearbeitungsvorrichtung an einer bestimmbaren Position umfasst.

Es kann vorgesehen sein, dass die Steinbearbeitungsvorrichtung eine Aufraueinrichtung zum Aufrauen der Schnittfläche des bearbeiteten Steins umfasst.

Es kann vorgesehen sein, dass die Aufraueinrichtung als Stockkopf ausgebildet ist. Das Stocken führt zu einer besseren Flächenleistung und gleichmäßigeren Optik. Ferner wird auch die Rutschsicherheit erhöht, Frostschäden verhindert, und auch die Haftfähigkeit der Steine erhöht. Das Stocken bzw. das Aufrauen führt zu einer normgerechten Herstellung der Schnittfläche, da die Aufrauung der Schnittfläche zu einer besseren Stabilität der Fugenfüllung führt.

Es kann vorgesehen sein, dass die Aufraueinrichtung derart an dem Gestell angeordnet ist, dass der Stein nach der Schneideeinrichtung mittels der Aufraueinrichtung bearbeitbar ist.

Es kann vorgesehen sein, dass die Steinbearbeitungsvorrichtung eine temporäre Fixiereinrichtung umfasst, welche eingerichtet ist, die Steinbearbeitungsvorrichtung an einer bestimmbaren Position derart zu fixieren, sodass die Hebeeinrichtung verwendbar ist. Dadurch wird ein korrektes Ausrichten und Sichern der Steinbearbeitungsvorrichtung möglich, wodurch präzise Schnitte möglich sind. Ebenso wird ein Verkippen der Vorrichtung verhindert. Es kann vorgesehen sein, dass die Fixiereinrichtung vier separate Stützen umfasst, welche jeweils in der Höhe einstellbar sind, um die Steinbearbeitungsvorrichtung auszurichten.

Es kann vorgesehen sein, dass die Abnahmeeinrichtung als Stauraum ausgebildet ist, d.h. das Förderband geht in eine Rollenbahn über, die gewährleistet, dass der Stein ohne Stillstand der Vorrichtung für einen Greifvorgang in Ruhe verharrt.

Es kann vorgesehen sein, dass das Förderband ein elektronisch gesteuertes Förderband ist, wobei die Geschwindigkeit des Förderbandes regulierbar ist.

Es kann vorgesehen sein, dass die Schneideeinrichtung eine Kühlung des Schneidewerkzeugs und der Schnittstelle mittels Schneidflüssigkeit, vorzugsweise Wasser, umfasst. Dadurch wird einerseits die Staubentwicklung minimiert und andererseits die Schnittqualität verbessert.

Es kann vorgesehen sein, dass das Gestell eine Auffangwanne für eine Schneidflüssigkeit umfasst. Die Schneidflüssigkeit wird dabei derart aufgefangen, dass diese wiederverwendbar ist.

Es kann vorgesehen sein, dass die Schneideeinrichtung eine Laservorrichtung umfasst, welche eingerichtet ist, eine Schnittlinie des Schneidewerkzeuges zum Ausrichten des zu bearbeiteten Steins abzubilden. Dadurch ist es möglich, dass auf mechanische Anschläge zum Ausrichten des Steins vor dem Schneidvorgang verzichtet werden kann, da durch die angezeigte Schnittlinie des Schneidewerkzeugs der Stein vor dem Steinvorgang auf der Zuführeinrichtung ausgerichtet werden kann.

Es kann vorgesehen sein, dass die Schallschutzhaube zumindest eine öffen- und verschließbare Seitenwand umfasst. Dadurch sind Wartungs- und Reparaturarbeiten sowie Reinigungsvorgänge an der Vorrichtung bzw. der Schneideeinrichtung möglich.

Es kann vorgesehen sein, dass die Steinbearbeitungsvorrichtung eine elektrische Rangiereinrichtung umfasst, mittels welcher, die Steinbearbeitungsmaschine an die bestimmbare Position versetzbar ist.

Es kann vorgesehen sein, dass die Rangiereinrichtung hierzu zumindest ein durch einen elektrischen Antrieb antreibbares Rad umfasst, wobei die Rangiereinrichtung an dem Gestell angeordnet ist. Der elektrische Antrieb, welcher das Rad der Rangiereinrichtung antreibt, ist eine von der übrigen Steinbearbeitungsmaschine separate Energiequelle, vorzugsweise ein Akku, insbesondere durch 12-Volt Akku. Zudem kann vorgesehen sein, dass das Rad verschwenkbar gelagert ausgebildet ist.

Die Steinschneidevorrichtung gemäß der vorliegenden Erfindung adressiert die eingangs erwähnter Herausforderungen durch die Integration einer kompakten, transportablen Konstruktion, die es ermöglicht, die Schneidemaschine direkt an den Einsatzort zu bringen. Diese Flexibilität reduziert nicht nur die Notwendigkeit des Transports großer Steinblöcke, sondern ermöglicht auch die Bearbeitung vor Ort, was insbesondere bei Bauprojekten in schwer zugänglichen oder weit entfernten Regionen von Vorteil ist.

### Figurenbeschreibung

Nachfolgend wird die Erfindung anhand von beispielhaften Zeichnungen näher erläutert. Hierbei zeigt:
- Fig. 1: eine beispielhafte mobile Steinbearbeitungsvorrichtung in einer perspektivischen Ansicht,
- Fig. 2: die beispielhafte Steinbearbeitungsvorrichtung aus Fig. 1 in einer weiteren perspektivischen Ansicht,
- Fig. 3: die Steinbearbeitungsvorrichtung aus Fig. 1 in einer Ansicht von oben,
- Fig. 4: die Steinbearbeitungsvorrichtung aus Fig. 1 in einer Seitenansicht,
- Fig. 5: eine schematische Darstellung eines auf das Förderband der Steinbearbeitungsvorrichtung angeordneten Steins, und
- Fig. 6: eine schematische Darstellung eines auf das Förderband durch das Schneidwerkzeug angepressten Steins.

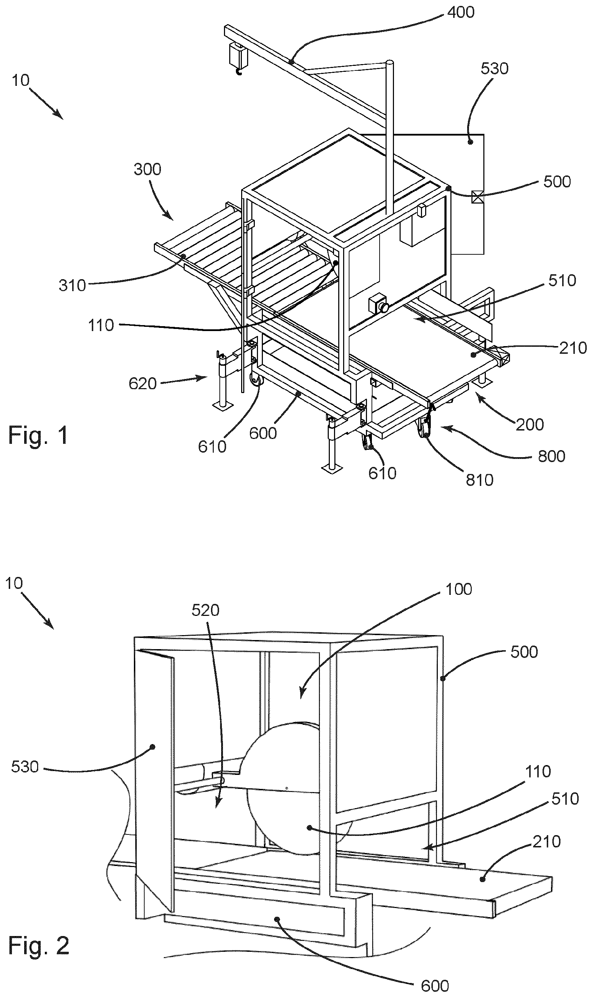

**Fig. 1** und **Fig. 2** zeigen eine mobile Steinbearbeitungsvorrichtung **10** zum Bearbeiten von Steinen **20,** insbesondere zum Schneiden von Betonsteinen und/oder Natursteinen, wobei die Steinbearbeitungsvorrichtung eine Schneideeinrichtung **100** umfasst, welche ein elektromotorisch angetriebenes Schneidwerkzeug **110** zum Schneiden von Steinen aufweist, welches im gezeigten Beispiel als Sägeblatt ausgebildet ist.

Ferner umfasst die Steinbearbeitungsvorrichtung **10** eine Zuführeinrichtung **200** zum Auflegen und Zuführen des zu bearbeitenden Steins zur Schneideeinrichtung **100** sowie eine Abnahmeeinrichtung **300** zum Abnehmen des in der Schneideeinrichtung **100** bearbeiteten Steins.

Zum Heben des zu schneidenden Steins auf die Zuführeinrichtung **200** und zum Heben des geschnittenen Steins von der Abnahmeeinrichtung **300** umfasst die Steinbearbeitungsvorrichtung 10 weiters eine Hebeeinrichtung **400.**

Ferner umfasst die Steinbearbeitungsvorrichtung **10** Schallschutzhaube **500,** welche die Schneideeinrichtung **100** umgibt und eingerichtet ist, den von der Schneideeinrichtung **100** erzeugenden Schall zu dämmen, wobei die Schallschutzhaube **500** eine Einführöffnung **510** und eine Ausführöffnung **520** aufweist. Ein zu bearbeitender Stein ist durch die Zuführeinrichtung **200** über die Einführöffnung **510** zum Schneidewerkzeug führbar.

Die Schallschutzhaube **500** umfasst zumindest eine öffen- und verschließbare Seitenwand **530,** welche Reparatur- und Reinigungsarbeiten an der Schneideeinrichtung **100** ermöglichen.

Ferner umfasst die Steinbearbeitungsvorrichtung **10** ein Gestell **600,** welches die vorgenannten Komponenten trägt, wobei das Gestell **600** Rollen **610** zum mobilen Positionieren der Steinbearbeitungsvorrichtung **10** an einer bestimmbaren Position umfasst.

Zusätzlich umfasst die mobile Steinbearbeitungsvorrichtung **10** eine Aufraueinrichtung **700** zum Aufrauen der Schnittfläche des bearbeiteten Steins, wobei die Aufraueinrichtung **700** derart an dem Gestell **600** angeordnet ist, dass der Stein nach der Schneideeinrichtung **100** mittels der Aufraueinrichtung **700** bearbeitbar ist. Die Aufraueinrichtung **700** ist im gezeigten Beispiel als Stockkopf ausgebildet.

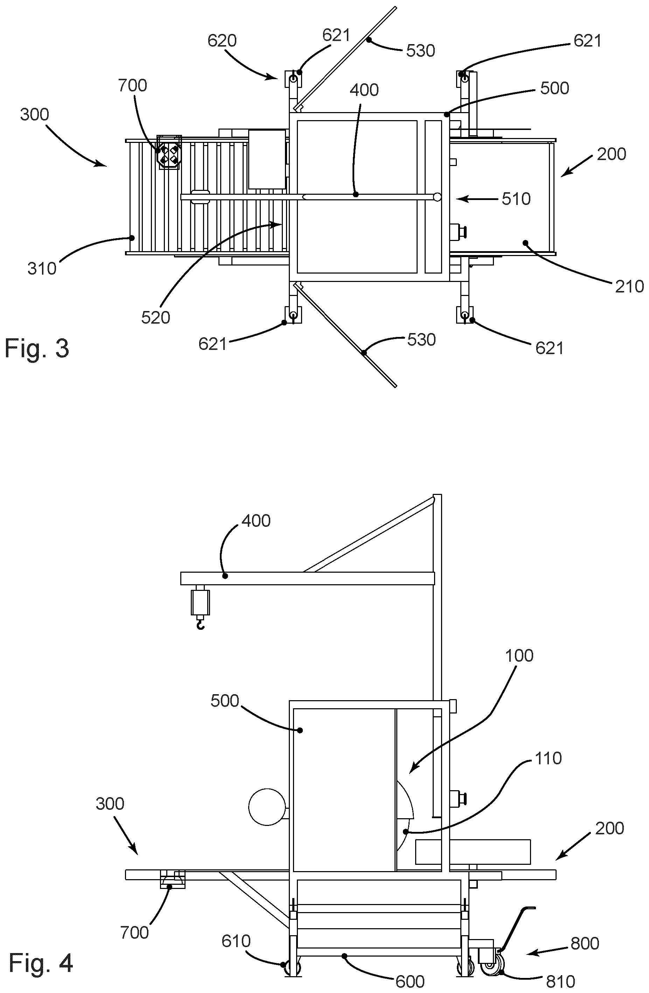

Ferner umfasst die Steinbearbeitungsvorrichtung **10** eine temporäre Fixiereinrichtung **620,** welche eingerichtet ist, die Steinbearbeitungsvorrichtung **10** an einer bestimmbaren Position derart zu fixieren, sodass die Hebeeinrichtung **400** verwendbar ist. Hierzu umfasst die Fixiereinrichtung **620** vier separate Stützen **621,** welche jeweils in der Höhe einstellbar sind, um die Steinbearbeitungsvorrichtung auszurichten. **Fig. 3** zeigt, wie die Stützen an einem Untergrund angeordnet sind im gezeigten Beispiel.

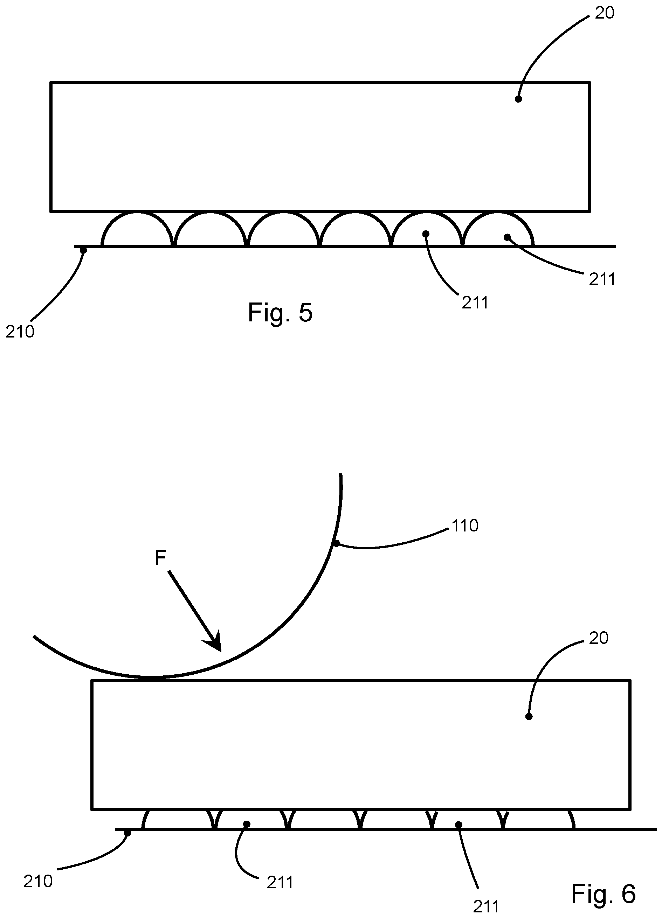

Die Zuführeinrichtung **200** umfasst im gezeigten Beispiel ebenso ein Förderband **210,** welches in zwei entgegengesetzte Richtungen betreibbar ist. Das Förderband **210** weist zudem eine Vielzahl von nebeneinander angeordneten, elastischer noppenartiger Elemente **211** auf (im weiteren Verlauf "Noppen" genannt), welche derart mit dem Schneidwerkzeug **110** zusammenwirken, dass beim Schneidvorgang des Steins durch das Schneidwerkzeug **110** eine Kraft F auf den Stein in Richtung des Förderbandes **210** ausgeübt wird, wodurch der Stein die Noppen **211** des Förderbandes **210** derart andrückt, sodass die Oberfläche der Noppen **211,** an welchen der Stein anliegt, vergrößert ist, um den Stein gegen ein Verschieben beim Schneiden zu sichern, wie schematisch in **Fig. 5** und **Fig. 6** dargestellt ist, wobei in **Fig. 5** der Stein **20** ohne eine von dem Schneidwerkzeug **110** ausgeübten Kraft **F** auf dem Förderband angeordnet ist. In **Fig. 6** wird eine Kraft **F** auf den Stein **20** ausgeübt, wodurch die elastischen Noppen **211** zusammengedrückt werden, sodass die an dem Stein **20** angreifende Oberfläche der Noppen **211** vergrößert wird. Bei Wegfall der Kraft **F** kehren die Noppen **211** wieder in ihre ursprüngliche Form zurück.

Ferner umfasst die Schneideeinrichtung **100** eine Kühlung des Schneidewerkzeugs **110** und der Schnittstelle mittels Schneidflüssigkeit, vorzugsweise Wasser.

Die Schneideeinrichtung **100** umfasst weiters eine Laservorrichtung (nicht dargestellt), welche eingerichtet ist, eine Schnittlinie des Schneidewerkzeuges **110** zum Ausrichten des zu bearbeiteten Steins **20** abzubilden. Die durch die Laservorrichtung erzeugbare Schnittlinie wird auf der Zuführeinrichtung **200** bzw. auf dem Förderband **210** abgebildet. Der Stein kann anhand der abgebildeten Schnittlinie ausgerichtet und positioniert werden.

Ferner umfasst die Steinbearbeitungsvorrichtung **10** eine elektrische Rangiereinrichtung **800,** mittels welcher die Steinbearbeitungsmaschine **10** an die bestimmbare Position versetzbar ist, wobei die Rangiereinrichtung **800** unter anderem in **Fig. 2** und **Fig. 4** dargestellt ist.

In der gezeigten Ausführungsform umfasst die Rangiereinrichtung **800** ein durch einen elektrischen Antrieb (nicht dargestellt) antreibbares Rad **810,** wobei die Rangiereinrichtung an dem Gestell angeordnet ist. Das Rad **810** ist verschwenkbar ausgebildet, um die Steinbearbeitungsvorrichtung **10** in unterschiedliche Richtungen bewegen und lenken zu können.

Der elektrische Antrieb, welcher das Rad **810** der Rangiereinrichtung **800** antreibt, ist eine von der übrigen Steinbearbeitungsmaschine **10** separate Energiequelle, vorzugsweise ein Akku, insbesondere durch 12-Volt Akku.

### LISTE DER BEZUGSZEICHEN

| | |
|---|---|
| Steinbearbeitungsvorrichtung | 10 |
| Stein | 20 |
| Schneideeinrichtung | 100 |
| Schneidwerkzeug | 110 |
| Zuführeinrichtung | 200 |
| Förderband | 210 |
| Noppen | 211 |
| Abnahmeeinrichtung | 300 |
| Rollen | 310 |
| Hebeeinrichtung | 400 |
| Schallschutzhaube | 500 |
| Einführöffnung | 510 |
| Ausführöffnung | 520 |
| Seitenwand | 530 |
| Gestell | 600 |
| Rollen (Gestell) | 610 |
| Fixiereinrichtung | 620 |
| Aufraueinrichtung | 700 |
| Rangiereinrichtung | 800 |
| Rad (Rangiereinrichtung) | 810 |
| Kraft | F |

## Patentansprüche

1. Steinbearbeitungsvorrichtung (10) zum Bearbeiten von Steinen (20), insbesondere eine mobile Steinbearbeitungsvorrichtung, insbesondere zum Schneiden von Betonsteinen und/oder Natursteinen, wobei die Steinbearbeitungsvorrichtung (10) Folgendes umfasst:
- eine Schneideeinrichtung (100), umfassend ein elektromotorisch angetriebenes Schneidwerkzeug (110) zum Schneiden von Steinen, insbesondere ein Sägeblatt,
- eine Zuführeinrichtung (200) zum Auflegen und Zuführen des zu bearbeitenden Steins (20) zur Schneideeinrichtung (100),
- eine Abnahmeeinrichtung (300) zum Abnehmen des in der Schneideeinrichtung (100) bearbeiteten Steins (20),
- ein Gestell (600), welches die vorgenannten Komponenten trägt, und
**dadurch gekennzeichnet, dass**
die Zuführeinrichtung (200) ein Förderband (210) umfasst, welches vorzugsweise in zwei entgegengesetzte Richtungen betreibbar ist, wobei das Förderband (210) eine Vielzahl von nebeneinander angeordneten, elastischer Elemente (211), vorzugsweise noppenartiger Elemente, aufweist, welche derart mit dem Schneidwerkzeug (110) zusammenwirken, dass beim Schneidvorgang des Steins durch das Schneidwerkzeug (110) eine Kraft (F) auf den Stein in Richtung des Förderbandes (210) ausgeübt wird, wodurch der Stein die elastischen Elemente (211) des Förderbandes (210) derart andrückt, sodass die Oberfläche der elastischen Elemente (211), an welcher der Stein anliegt, vergrößert ist, um den Stein gegen ein Verschieben beim Schneiden zu sichern.

2. Steinbearbeitungsvorrichtung nach Anspruch 1, **wobei** die Steinbearbeitungsvorrichtung eine Hebeeinrichtung (400), zum Heben des zu schneidenden Steins (20) auf die Zuführeinrichtung (200) und zum Heben des geschnittenen Steins (20) von der Abnahmeeinrichtung (300) umfasst.

3. Steinbearbeitungsvorrichtung nach Anspruch 1 oder 2, **wobei** die Steinbearbeitungsvorrichtung eine Schallschutzhaube (500) umfasst, welche die Schneideeinrichtung (100) umgibt und eingerichtet ist, den von der Schneideeinrichtung (100) erzeugenden Schall zu dämmen, wobei die Schallschutzhaube (500) eine Einführöffnung (510) und eine Ausführöffnung (520) aufweist, wobei ein zu bearbeitender Stein durch die Zuführeinrichtung (200) über die Einführöffnung (510) zum Schneidewerkzeug führbar ist.

4. Steinbearbeitungsvorrichtung nach einem der vorhergehenden Ansprüche, **wobei** das Gestell (600) Rollen (610) zum mobilen Positionieren der Steinbearbeitungsvorrichtung (10) an einer bestimmbaren Position umfasst.

5. Steinbearbeitungsvorrichtung nach einem der vorhergehenden Ansprüche, **wobei** die Steinbearbeitungsvorrichtung (10) eine Aufraueinrichtung (700) zum Aufrauen der Schnittfläche des bearbeiteten Steins umfasst.

6. Steinbearbeitungsvorrichtung nach Anspruch 5, **wobei** die Aufraueinrichtung (700) als Stockkopf ausgebildet ist.

7. Steinbearbeitungsvorrichtung nach Anspruch 5 oder 6, **wobei** die Aufraueinrichtung (700) derart an dem Gestell (600) angeordnet ist, dass der Stein nach der Schneideeinrichtung (100) mittels der Aufraueinrichtung (700) bearbeitbar ist.

8. Steinbearbeitungsvorrichtung nach einem der vorhergehenden Ansprüche, **wobei** die Steinbearbeitungsvorrichtung (10) eine temporäre Fixiereinrichtung (620) umfasst, welche eingerichtet ist, die Steinbearbeitungsvorrichtung (10) an einer bestimmbaren Position derart zu fixieren, sodass die Hebeeinrichtung (400) verwendbar ist.

9. Steinbearbeitungsvorrichtung nach einem der vorhergehenden Ansprüche, **wobei** die Schneideeinrichtung (100) eine Laservorrichtung umfasst, welche eingerichtet ist, eine Schnittlinie des Schneidewerkzeuges zum Ausrichten des zu bearbeiteten Steins (20) abzubilden.

10. Steinbearbeitungsvorrichtung nach einem der vorhergehenden Ansprüche, **wobei** die Steinbearbeitungsvorrichtung (10) eine elektrische Rangiereinrichtung (800) umfasst, mittels welcher, die Steinbearbeitungsmaschine (10) an die bestimmbare Position versetzbar ist.
